Europäisches Patentamt

European Patent Office

Office européen des brevets

(19)

(11) Veröffentlichungsnummer : **0 049 524**
**B1**

(12) **EUROPÄISCHE PATENTSCHRIFT**

(45) Veröffentlichungstag der Patentschrift :
20.08.86

(21) Anmeldenummer : 81108001.9

(22) Anmeldetag : 06.10.81

(51) Int. Cl.⁴ : **H 01 Q   1/42, E 04 C   2/20,
B 29 D   9/00, B 32 B 27/40**

(54) Verfahren zur Herstellung eines Fassadenelements für die Herstellung eines Radoms.

(30) Priorität : 06.10.80 DE 3037727

(43) Veröffentlichungstag der Anmeldung :
14.04.82 Patentblatt 82/15

(45) Bekanntmachung des Hinweises auf die Patenterteilung : 20.08.86 Patentblatt 86/34

(84) Benannte Vertragsstaaten :
AT BE CH DE FR GB IT LI LU NL SE

(56) Entgegenhaltungen :
DE-A- 2 334 220
DE-A- 2 742 188
DE-A- 2 837 110
FR-A- 1 523 411
FR-A- 1 574 279
FR-A- 2 064 020
FR-A- 2 121 390
FR-A- 2 431 200
US-A- 3 235 441
Skolnik: "Radar Handbook", McGraw-Hill, 1970, Seite
14-4

(73) Patentinhaber : G + H MONTAGE GmbH
Westendstrasse 17
D-6700 Ludwigshafen (DE)

(72) Erfinder : Felhauer, Paul, Ing. grad.
Sauserweg 9
D-6906 Leimen (DE)
Erfinder : Göbel, Arthur
Fürstenstrasse 6
D-6700 Ludwigshafen (DE)
Erfinder : Patschke, Hartmut
Nordring 50
D-6700 Ludwigshafen-Oppau (DE)

(74) Vertreter : Kuhnen, Wacker & Partner
Schneggstrasse 3-5 Postfach 1729
D-8050 Freising (DE)

EP 0 049 524 B1

**Beschreibung**

Die Erfindung betrifft ein Verfahren zur Herstellung eines Fassadenelements für die Herstellung eines Radoms nach dem Oberbegriff des Anspruchs 1. Aus der DE-B-1 273 023 ist ein Verfahren zur Herstellung eines aus Hartschaum bestehenden selbsttragenden turmartigen Gehäuses zum Schutz funktechnischer Anlagen bekannt, das aus plattenförmigen, vorgefertigten Bauteilen zusammengefügt wird. Bei der Herstellung dieser Bauteile wird zunächst das lediglich aus Hartschaumstoff bestehende Teil angefertigt, wobei jedes einzelne Teil eine seiner späteren Verwendung entsprechende Form besitzt. Auf der Baustelle werden diese lediglich aus Hartschaumstoff bestehenden Bauteile zu der gewünschten Verkleidung funktechnischer Anlagen zusammengesetzt und miteinander durch Bindemittel verbunden. Um die Verkleidung gegen Witterungseinflüsse zu schützen bzw. optisch zu tarnen oder hervorzuheben, kann sie bauseitig mit einer Witterungsschutzschicht versehen werden, die durch eine entsprechende Wahl der Farbpigmente die gewünschte Farbgebung aufweist. Hierdurch entsteht ein Bauteil, das im wesentlichen aus einer Hartschaumschicht besteht, die mit einer Deckschicht überschichtet ist.

Das bauseitige Anbringen einer Deckschicht setzt zum einen ein geübtes Montagepersonal und zum anderen entsprechend gute Witterungsbedingungen voraus. Sofern eine dieser Bedingungen nicht erfüllt ist, kann das Aufbringen einer derartigen Deckschicht nachteilig beeinflußt werden, insbesondere dann, wenn ein plötzlicher Witterungsumschlag erfolgt, der die frisch aufgetragene Schicht zerstören kann. Dieses bauseitige Auftragen der Schutzschicht ist aufwendig und erfordert eine hohe manuelle Geschicklichkeit beim Aufspritzen oder Aufstreichen der Schicht. Es kann daher vorkommen, daß bestimmte Bereiche auf den Bauteilen nur geringfügig oder sogar mangelhaft mit der Schutzschicht versehen sind, so daß die Schutzwirkung nicht vollständig erreicht wird. Auch eine noch so sorgfältige Auswahl des Arbeitspersonals kann nicht verhindern, daß gelegentlich derartige unregelmäßige Schichtdicken lokal auftreten. Außerdem ist das bauseitige Anbringen einer Schutzschicht sehr aufwendig und langwierig.

In den meisten Fällen ist es ausreichend, wenn die Oberfläche dieser Schutzschicht eine matte Struktur besitzt. Dies ist insbesondere bei getarnten Bauten erwünscht. Die bisher aufgetragenen Lacke auf der Basis von Polyurethan erzeugen jedoch eine glänzende Oberfläche, die speziell nachbehandelt werden muß, um sie matt zu machen. Andererseits können Lacke, die eine matte Struktur erzeugen, nicht eingesetzt werden, da sie Bestandteile aufweisen, die elektromagnetische Strahlen strark absorbieren.

Es ist etwa aus der FR-A-1 523 411, der FR-A-1 574 279, der DE-A-2 742 188 oder der DE-A-2 334 220 bereits bekannt, für andere Zwecke Schaumstoffkörper herzustellen, die werksseitig bereits in der Schäumform mit einer Deckschicht versehen werden, anstatt diese nachträglich durch Anstrich oder Anklebung aufzubringen. Soweit es sich dabei um vom Verfahrensablauf her vergleichbare Vorgänge handelt, also die Einzelherstellung von Elementen im Einstufenverfahren, erfolgt dabei ein Anschäumen einer vorgefertigten Folie oder dergleichen, wobei die Verbindung zwischen dem Schaumstoffkern und der Deckschicht durch Klebewirkung des Schaumstoffes bzw. oberflächenseitige Anlösung der Deckschicht im Zuge des Schäumvorganges erzielt wird. Im Falle der FR-A-1 523 411 handelt es sich um einen kontinuierlichen Herstellungsvorgang durch Aufschäumen des Schaumstoffes zwischen zwei Bändern, was mit einem gattungsgemäßen Einstufenverfahren nicht vergleichbar ist, und wird in Form einer Cellophanfolie ebenfalls eine ebenfalls vorgefertigte äußere Abdeckung verwendet.

Aus der US-A-3 235 441 ist es bei einem Fassadenelement zum Schutz funktechnischer Angaben bekannt, pelletiertes oder pulverförmiges Material hoher Dielektrizitätskonstante, das mit einem organischen Binder gebunden sein kann, als Hauptschicht zu verwenden, und dieses Material gegebenenfalls beidseitig durch vorgefertigte Schichten aus glasfaserverstärktem Polyestermaterial abzudecken, wobei gegebenenfalls über wabenförmige Kammern, in denen die Pellets enthalten sind, nur eine mechanische Verbindung zwischen Hauptschicht und Deckschichten erfolgt. Ebenso ist es aus der FR-A-2 431 200 bekannt, Außenschichten aus glasfaserverstärktem Kunststoff zur Erzielung einer Verbesserung der mechanischen Festigkeit durch Sandwich-Konstruktion vorzusehen.

Aus dem Buch von Skolnik « Radar Handbook », McGraw-Hill 1970, Seite 14-4, « Radome Coatings and Films » ist es bekannt, einen Anstrich auf Epoxidharzbasis als Wetterschutz zu verwenden. Epoxidharz zeichnet sich durch hohe Elastizität und Schlagzähigkeit aus.

Bei einem Anstrich oder einer sonstigen mechanisch befestigten Deckschicht auf der Basis von Epoxidharz auf einer Hauptschicht aus Hartschaum auf der Basis von Polyurethan ergibt sich jedoch die Schwierigkeit, daß nach einer bestimmten Benutzungsdauer unter ungünstigen Witterungseinflüssen ein Ablösen der Deckschicht von der Hauptschicht nicht zu vermeiden ist. Insbesondere ist eine Deckschicht auf Epoxidharzbasis weitgehend dampfdiffusionsdicht, so daß ein insbesondere bei Sonneneinstrahlung unterhalb der Deckschicht in der Hauptschicht auftretender Wasserdampfdruck zu einem lokalen Abheben der Deckschicht unter Blasenbildung führt. Hinzu kommen gerade bei starker Sonneneinstrahlung entsprechende thermische Dehnungen, die zusätzliche Spannungen einführen und so ein derartiges Abheben begünstigen.

Demgegenüber liegt der Erfindung die Aufgabe zugrunde, ein Verfahren nach dem Oberbegriff des Anspruchs 1 zu schaffen, das mit möglichst geringem Aufwand ein Fassadenelement schafft, dessen elastische Deckschicht hoher Schlagzähigkeit die Hauptschicht unter allen Umständen auch nach langer Benutzungsdauer sauber und frei von Fehlstellen abdeckt.

Die Lösung dieser Aufgabe erfolgt durch die kennzeichnenden Merkmale des Anspruchs 1.

Gemäß Verfahrensschritt (a) wird dabei zunächst in an sich bekannter Weise auf Epoxidharz zur Bildung der Deckschicht zurückgegriffen. Die Deckschicht wird jedoch nicht nachträglich aufgebracht, sondern bereits in die Schäumform eingebracht, auch dies jedoch nicht als vorgefertigte Folie oder dergleichen, sondern noch während der Topfzeit des Epoxidharzes, so daß dieses also in der Form feucht und unausgehärtet vorliegt. Erst danach wird die schäumfähige Polyurethanmasse in die geschlossene Schäumform eingebracht und aufgeschäumt sowie ausgehärtet, wobei die hierbei entstehende exotherme Wärme das Epoxidharz der Deckschicht aushärtet, während die Polyurethanmasse unter Druck daran anliegt. Auf diese Weise entsteht eine innige, chemische Verbindung zwischen Deckschicht und Hauptschicht ohne Ausbildung einer Produktionshaut auf der Hauptschicht aus Polyurethan. Damit ist sichergestellt, daß die Deckschicht gleichförmiger Dicke innig mit der Hauptschicht verbunden ist und diese Verbindung unter den auftretenden Belastungen nicht gelöst werden kann. Insbesondere ist ein Eindringen von Wasser von der Stirnseite eines solchen Fassadenelementes her infolge der sozusagen einstückigen Verbindung zwischen Deckschicht und Hauptschicht ausgeschlossen, so daß sich unter der Deckschicht und Hauptschicht ausgeschlossen, so daß sich unter der Deckschicht kein schädlicher Dampfdruck entwickeln kann. Die homogene Dicke der Deckschicht über die gesamte Oberfläche verhindert dabei die Bildung anfälliger Stellen, so daß die Deckschicht überall gleich widerstandsfähig ist. Durch die Aushärtung der Deckschicht in der Form ergibt sich darüber hinaus eine ausgezeichnete strukturelle Qualität und Oberflächengüte der Deckschicht. Für die Aufbringung der Deckschicht fallen nur geringe zusätzliche Kosten durch die vorherige Beschichtung der Schäumform mit dem unausgehärteten Epoxidharz an, während spätere Nacharbeiten, die etwa infolge der Notwendigkeit der Entfernung der Produktionshaut des Polyurethanschaums aufwendig sind und nur bei guter Witterung durchgeführt werden können, vollständig entfallen.

Weiterhin ist vorteilhaft, daß das Fassadenelement nach der Herstellung aus der Form mit einer matten Oberfläche entnommen werden kann, was insbesondere für die Herstellung militärischer Objekte aus Tarngründen wichtig ist. Sollte dennoch eine glänzende Oberfläche gewünscht sein, so kann dies durch einfaches Nachpolieren werksseitigerfolgen. Bevorzugt bei der Herstellung der Deckschicht sind solche Epoxidharze, bei denen Epoxide mit Polyalkoholen unter Mitwirkung eines Härters vernetzt werden. Zu Polyalkoholen gehören Diphenylolpropan sowie andere hydroxylgruppenhaltige höhermolekulare Verbindungen, wie beispielsweise ein Phenolharz-Novolak. Diese Verbindungen werden mit einer Epoxidverbindung, beispielsweise mit Epichlorhydrin oder Glycidylverbindungen zu den entsprechenden Epoxidharzen umgesetzt. Weiterhin können auch cycloaliphatische Epoxidharze zum Einsatz kommen. Diese Harze weisen häufig eine die Verarbeitung behindernde hohe Viskosität auf, die jedoch durch Zumischen von Verdünnungsmitteln auf der Basis von Glycidylester gesenkt werden kann.

Diese Epoxidharze werden im allgemeinen unter Druck und Wärme und Anwesenheit eines Härters in den duroplastischen Zustand überführt. Als Härtungsmittel kommen Dicarbonsäureanhydride, wobei basische Katalysatoren verwendet werden, Aminoverbindungen, insbesondere Diäthylentriamin, 4,4'-Diaminodiphenylmethan, Hexamethylendiamin, Trimethylamin und dgl. in Frage, wobei auch sog. Aminaddukte, also Umsetzungsprodukte von verschiedenen Aminverbindungen eingesetzt werden können. Bei diesen Aminaddukt-Härtern wird ein Teil der Vernetzung der Aminwasserstoffe mit Epoxidgruppen vorgenommen. Die Reaktivität dieser Härter ist meist etwas geringer als beim reinen Amin. Neben den aliphatischen Polyaminen können auch cycloaliphatische oder aromatische Diamine eingesetzt werden.

Um ein Epoxidharz vollständig mit den Aminen zu vernetzen wird meist die 4-fache molare Menge an Amin eingesetzt, so daß eine genügende Anzahl von freiem Aminwasserstoff für weitere Vernetzung von Epoxidharzen zur Verfügung steht.

Um die gewünschte Deckschicht zu erhalten, ist es wichtig, daß die Mischungsverhältnisse zwischen Epoxidharz einerseits und Aminoverbindung andererseits genau eingehalten werden, wobei Abweichungen von 1 bis 5% statthaft sind. Dieses Mischungsverhältnis hängt einerseits von der Zahl der Epoxidgruppen, die in einer bestimmten Menge Harz enthalten sind, und andererseits von dem Wasserstoff-Aktiväquivalent des Härters ab. Diese Werte werden vom Erzeuger angegeben, so daß diese Mischungsverhältnisse werkseitig leicht einzustellen sind.

Ggfs. können diese Epoxidharze Flexibilisatoren und Weichmacher, die die plastische Zierung im ausgehärteten Werkstoff verbessern, und Füllstoffe aufweisen.

Je nach der Wahl der Aminhärter müssen unterschiedliche Wärmemengen zugeführt werden, um die Härtungsreaktion zu starten. Erfindungsgemäß hat es sich als ausreichend erwiesen, derartige Härter einzusetzen, die bereits bei Zimmertemperatur oder etwas darüber aktiv werden. Andererseits können jedoch auch Härter eingesetzt werden, die zur Beschleunigung der Reaktion in einer vorerwärmten Form mit dem Epoxidharz umgesetzt werden. Dieses Reaktionsgemisch wird innerhalb seiner Topfzeit, die üblicherweise bis zu 1 Stunde beträgt, verarbeitet, wobei es nach üblichen Auftragsverfahren, wie Spritzen oder Walzen, weiter verarbeitet wird.

Erfindungsgemäß wird die Schichtdicke der Deckschicht so gewählt, daß sie einerseits einen dauerhaften Bezug der Hauptschicht gewährleistet, jedoch andererseits die isolierenden und elastischen Eigenschaften dieser Hauptschicht nicht behindert. Sie liegt üblicherweise in einem Bereich von 0,1-1 mm, vorzugsweise etwa 0,3 mm.

Die vorstehenden Massen werden vorteilhafterweise bereits beim Vermischen mit den Pigmenten versehen, die dem erfindungsgemäßen Fassadenelement die gewünschte Farbe verleihen. Zweckmäßig werden derartige Pigmente eingesetzt, die elektromagnetische Wellen weder absorbieren noch reflektieren.

Da die vorstehenden Massen häufig eine hohe Haftfähigkeit an der Form besitzen, wird die Form vorteilhafterweise mit einem Trennmittel, beispielsweise Flüssigwachsen oder Silikonölen versehen, um ein problemloses Entformen sicher zu stellen.

Auf dieses Trennmittel wird die Masse zur Herstellung der Deckschicht aufgebracht, die nach einer gewissen Alterung mit der Masse zur Herstellung des Hartschaumstoffs überschichtet werden kann.

Der PU-Schaum der Hauptschicht besteht im wesentlichen aus zwei Hauptkomponenten, nämlich Polyhydroxylverbindungen und Diisocyanaten.

Als Polyhydroxylverbindungen kommen zur Herstellung von harten Schaumstoffen besonders Polyester aus Adipinsäure, Phthalsäure und Triol in Frage, wobei OH-Zahlen bis 400 erreicht werden. Andererseits können auch andere Säuren, wie Isosebacinsäure oder zweibasische Dimersäuren, ggfs. modifiziertes Rizinusöl oder Tallöl in Frage kommen. Als Diisocyanat haben sich Toluylen-Diisocyanat oder Diphenylmethan-4,4'-Diisocyanat bewährt, wobei das letztere insbesondere zur Herstellung von hoch verdichteten Hartschaumstoffen eingesetzt wird.

Die Schaumgeschwindigkeit kann durch Katalysatoren, insbesondere durch Amino- und Zinn-Verbindungen gesteuert werden, wobei sie insbesondere beim Einstufenverfahren zur Anwendung kommen. Bei diesem Einstufenverfahren werden Polyhydroxyverbindung, Diisocyanate und Wasser sowie Treibmittel gleichzeitig vermischt, wobei einerseits die Polymerisation zu starten beginnt und andererseits das Aufschäumen des Polyurethans durch Zersetzung der Diisocyanatgruppe durch Wasser und Bildung von Kohlendioxyd eintritt. Diese Reaktion ist stark exotherm, so daß im Kern der Schicht Temperaturen bis zu 150 °C, am Rand dieser Hauptschicht bis zu 100 °C auftreten können.

Ggfs. können die Gemische unter Zusatz eines Emulgators emulgiert werden. Weiterhin können Porenregler und Schaumstabilisatoren zur Verbesserung der mechanischen Eigenschaften und Ausbildung einer gleichmäßigen Schaumstruktur zugesetzt werden.

Vorzugsweise sind die PU-Hartschaumstoffe schwer entflammbar ausgerüstet. Dies kann dadurch erreicht werden, daß man dem Schäumgemisch halogen- und/oder phosphorhaltige Reaktionskomponenten zusetzt, beispielsweise auf der Basis von Phosphonsäuren oder halogenierten Verbindungen.

Die vorstehenden Reaktionskomponenten werden zur Herstellung eines schaumfähigen Gemisches innig, beispielsweise nach dem Verdüsungsprinzip, vermischt, wodurch ein vollständig homogenes Gemisch erreicht wird. Nach dem Vermischen wird dieses Gemisch unter erhöhtem Druck in die bereits mit dem Epoxidharz der Deckschicht beaufschlagte Form eingespritzt, wo es zur Polymerisierung und Schäumung des Gemisches kommt.

Die Form selbst wird entsprechend der Struktur und Gestalt des gewünschten Fassadenelements gewählt und kann aus den gebräuchlichen Formmaterialien, wie Aluminium-, Stahl-, GFK- oder Holzwerkstoffen gefertigt sein, wobei natürlich darauf zu achten ist, daß diese Form infolge der beim Schäumen auftretenden hohen Expansionskräfte, die in der Größenordnung von $2 \times 10^6$N liegen, flüssigkeitsdicht ist.

Die in der Form auftretenden Wärmemengen, die auf die stark exotherme Reaktion zurückzuführen sind, unterstützen die Aushärtung der Deckschicht sowie der Hauptschicht und müssen entsprechend abgeführt, sofern zu hohe Temperaturen gebildet werden, oder aber mittels einer an der Form angebrachten Dämmschicht innerhalb der Form gespeichert werden, so daß eine Aushärtung bei erhöhten Temperaturen über mehrere Stunden sicher gestellt wird.

Die derart hergestellten Fassadenelemente weisen Flächengewichte von 200-400 kg/m² auf, wobei die Abmessungen dieser Elemente lediglich durch die geltenden Transportbedingungen begrenzt sind.

Die Dicke des Fassadenelements hängt von den Festigkeitsanforderungen ab. Diese Anforderungen sind einerseits durch die Gebäudekonstruktion, andererseits durch die Witterungsverhältnisse, insbesondere die Windverhältnisse bestimmt. Danach wird ein in selbsttragender Bauweise einsetzbares Fassadenelement eine größere Schichtdicke aufweisen, als ein in einem Halterahmen angeordnetes Element.

Auch die Form eines derartigen Fassadenelements ist nicht kritisch und kann entsprechend der konzipierten Fassadenverkleidung vorgefertigt sein. Beispielsweise können trapezförmig gewählte Platten als Fassadenelement eingesetzt werden. Andererseits sind auch einfach gewölbte oder sphärisch gekrümmte Fassadenelemente, beispielsweise zum Aufbau einer Kalotte denkbar.

Ein solches Fassadenelement wird über Bindemittel, die vorzugsweise aus dem gleichen Reaktionsgemisch bestehen, mit weiteren Fassadenelementen zur Antennenverkleidung zusammengebaut. Ein solches Bindemittel auf gleicher Grundlage wie die Hauptschicht gewährleistet eine praktisch über die gesamte Fassadenoberfläche gleichbleibende Dielektrizitätskonstante und verhindert dadurch Inhomogenitäten beim Empfang und Senden von elektromagnetischen Wellen. Vorzugsweise werden Fugen zwischen den Fassadenelementen mit geschäumten Polyrethanharz ausgefüllt, das aufgrund seiner schnellen Abbindeeigenschaften die Montage derartiger Antennenverkleidungen erheblich verkürzt.

Nach dem Verkleben der Randbereiche der Fassadenelemente mit dem entsprechenden Harz können die Montagegerüste und die Verschalung abgenommen werden, die zuvor wiederum mit einem Trennmittel gegenüber dem Hartschaumstoff versehen worden sind.

Weitere Einzelheiten, Merkmale und Vorteile der Erfindung sind aus der nachfolgenden Beschreibung und Zeichnung an Hand eines Ausführungsbeispiels ersichtlich.

Es zeigt

Figur 1 eine perspektivische Darstellung eines sphärisch gekrümmten Fassadenelements mit Schnittaufbrüchen und perspektivischen Detailvergrößerungen,

Figur 2 einen Schnitt durch das Fassadenelement gem. Fig. 1 entlang der Linie II-II,

Figur 3 einen Schnitt durch das Fassadenelement gem. Fig. 1 entlang der Linie III-III und

Figur 4 einen vergrößerten Ausschnitt eines Bereichs aus dem Fassadenelement gem. Fig. 3.

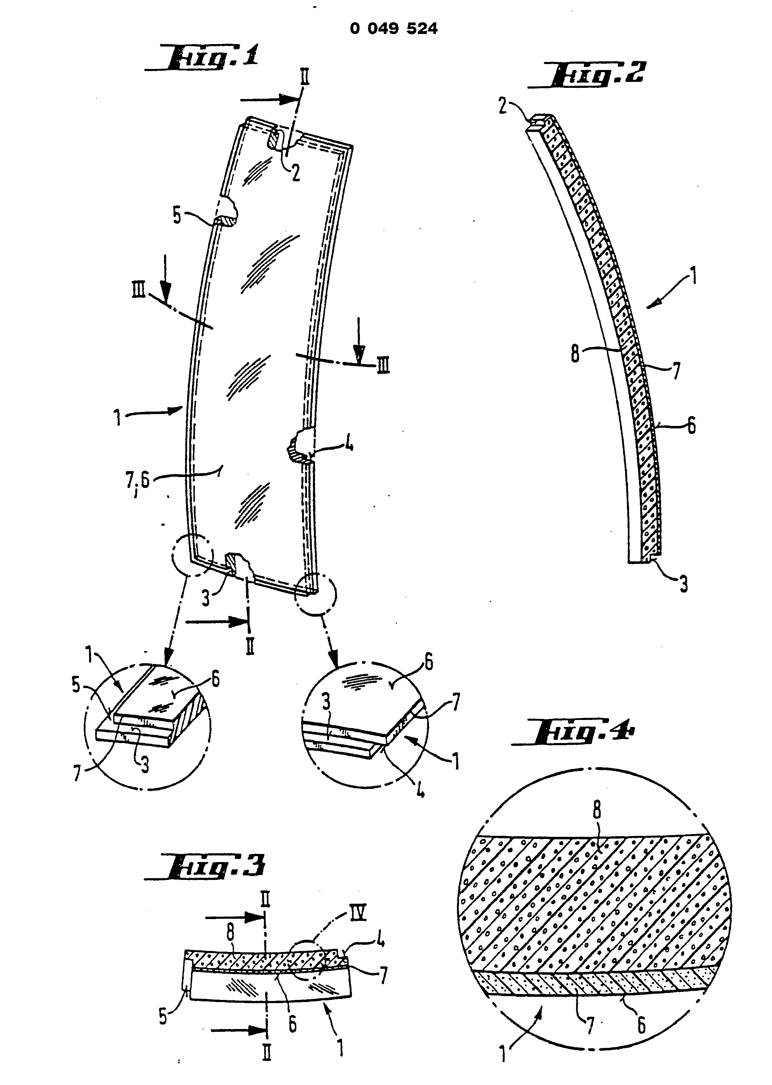

In Fig. 1 ist mit 1 ein Fassadenelement in perspektivischer Form gezeigt, das infolge seiner Krümmung sich als Segmentbauteil für eine kugelförmige Haube eignet. Derartige Hauben werden beispielsweise als Abdeckung für Radome eingesetzt. Ein derartiges Radom entsteht durch eine Aneinanderreihung einer Vielzahl derartiger Fassadenelemente 1, wobei diese Aneinanderreihung sich sowohl in waagrechter als auch in senkrechter Richtung erstreckt. Zur Erleichterung des Zusammenbaues ist das Fassadenelement 1 entlang seiner Umfangskanten mit einem Falz 2, 3, 4 und 5 derart ausgebildet, daß die entsprechenden Falze 2 und 3 sowie 4 und 5 beim Zusammenbau der Fassadenelemente 1 schlüssig zusammenpassen und damit eine homogene Oberfläche des entstandenen Bauwerks bilden. Die Darstellung und Anordnung dieser Falze 2, 3, 4 und 5 ist in Figuren 1 bis 3 gezeigt, aus denen ebenfalls die sphärische Krümmung des Fassadenelements 1 ersichtlich ist.

Fig. 4 stellt einen vergrößerten Teilausschnitt von Fig. 3 dar. Dabei ist mit 6 die Außenoberfläche des Fassadenelements gekennzeichnet, die vollständig mit einer Deckschicht 7 überzogen ist. Diese Deckschicht 7, die durch eine entsprechende Pigmentzumischung gefärbt ist, besteht aus einem gehärteten Epoxidharz, das werkseitig zusammen mit der PU-Hartschaumschicht 8 in einer Form ausgehärtet wurde. Infolge der werkseitigen Aushärtung bei erhöhten Temperaturen besitzt die Deckschicht 7 eine hohe Haftfähigkeit an der PU-Hartschaumschicht 8 und läßt sich deshalb nur äußerst schwer davon abziehen. Desweiteren entfällt infolge der werkseitigen Herstelung die komplizierte Bearbeitung der PU-Hartschaumschicht auf der Baustelle, also das Abschmirgeln der Oberfläche der Fassadenelemente, die sich bereits in zusammengebauten Zustand befinden, und das Anbringen der Deckschicht bei möglichst trockenen Witterungsverhältnissen und bei nicht zu tiefen Temperaturen. Infolge der hohen Haftfestigkeit und der homogenen Dickenverteilung der Deckschicht 7 über das gesamte Fassadenelement 1 ist außerdem eine hohe Witterungsbeständigkeit sichergestellt. Weiterhin wird durch das Anbringen der Dreckschicht 7 die elektromagnetische Durchlässigkeit der gesamten Anordnung praktisch nicht verändert, so daß die integral mit der PU-Hartschaumschicht 8 verbundene Deckschicht 7 sich ausgezeichnet zum Bau von Gebäuden und Verkleidungen eignet, die für elektromagnetische Strahlen durchlässig sein müssen. Weiterhin bleiben die Wärmeleiteigenschaften des PU-Hartschaums durch die Anbringung der Deckschicht 7 unbeeinflußt, die wasserdampfdicht ist und keine Feuchtigkeit durchläßt.

**Patentansprüche**

1. Verfahren zur Herstellung eines flächigen, selbsttragenden, gegen Witterungseinflüsse resistenten und gegen über ankommenden und abgehenden elektromagnetischen wellen dämpfungsarmen Fassadenelementes für die Herstellung eines Radoms mit einer Hauptschicht aus Hartschaum auf der Basis von Polyurethan und einer faserfreien Deckschicht als Wetterschutz, bei dem die schäumfähige Polyrethanmasse zur Bildung der Hauptschicht in einem Einstufenverfahren in eine Schäumform eingebracht und danach der Schäum- und Härtvorgang durchgeführt wird, dadurch gekennzeichnet, daß

a) als Material für die Deckschicht vernetzbares Epoxidharz verwendet wird,

b) das Epoxidharz zusammen mit einem Härter noch während seiner Topfzeit und vor dem Einbringen des schäumfähigen, die Hauptschicht bildenden Materials auf die Wand der Schäumform in zumindest bereichsweise gleichförmiger Dicke aufgetragen, insbesondere aufgespritzt oder aufgewalzt wird,

c) dann das die Deckschicht liefernde Material noch vor seiner Durchhärtung mit dem die Polyurethanhauptschicht bildenden Material überschichtet wird und

d) die bei der Schäum- und Polymerisationsreaktion des die Polyurethan-Hauptschicht bildenden Materials auftretende exotherme Wärme zur Beschleunigung der Härtung von sowohl der Deckschicht als auch der Hauptschicht genutzt wird.

2. Verfahren nach Anspruch 1, dadurch gekennzeichnet, daß vor dem Auftragen des Epoxidharzes ein Trennmittel wie Flüssigwachs oder Silikonöl auf die Wand der Schäumform aufgebracht wird.

3. Verfahren nach Anspruch 1 oder 2, dadurch gekennzeichnet, daß man eine wärmegedämmte Schäumform verwendet und diese gegebenenfalls vorheizt.

4. Verfahren nach einem der Ansprüche 1 bis 3, dadurch gekennzeichnet, daß das Epoxidharz in einer Dicke zwischen 0,1 und 1 mm, vorzugsweise von 0,3 mm auf die Wand der Schäumform aufgebracht wird.

## Claims

1. A process of manufacturing a self-supporting, weather-resisting, sheetlike façade element, which effects only a low attenuation of incoming and outgoing electromagnetic waves and is intended for use in the erection of a radome, comprising a main layer consisting of a hard polyurethane foam and a non-fibrous cover layer for protection against the weather, wherein the main layer is formed in a single-stage process in that the foamable polyurethane composition is introduced into a foaming mould and the foaming and curing operation is subsequently performed, characterized in that

a) a cross-linkable epoxide resin is used as a material for the cover layer,

b) the epoxide resin together with a curing agent is applied, particularly by spraying or rolling, to the wall of the foaming mould to form thereon a layer having a uniform thickness at least in certain regions, said application of the epoxide resin being effected during its pot life and before the foamable material for forming the main layer is introduced,

c) the material for forming the cover layer is coated with the material for forming the polyurethane main layer, which coating is effected before the material for the cover layer has been completely cured, and

d) the exothermic heat generated by the foaming and polymerizing reaction of the material for forming the polyurethane main layer is utilized to accelerate the curing of the cover layer and of the main layer.

2. A process according to claim 1, characterized in that a release agent such as liquid wax or silicone oil, is applied to the wall of the foaming mould before the epoxide resin is applied.

3. A process according to claim 1 or 2, characterized in that a heat-insulated foaming mould is used and is preheated, if desired.

4. A process according to any of claims 1 to 3, characterized in that the epoxide resin is applied to the wall of the foaming mould in a thickness between 0.1 and 1 mm, preferably of 0.3 mm.

## Revendications

1. Procédé pour la fabrication d'un élément de façade plan, autoportant, résistant aux intempéries, qui produit seulement un faible amortissement des ondes électromagnétiques arrivantes et partantes et est destiné à la fabrication d'un radôme comportant une couche principale en mousse dure à base de polyuréthane et une couche de couverture non fibreuse comme protection contre les intempéries, dans lequel la couche principale est formée par un procédé en une étape en versant la masse de polyuréthane pouvant mousser dans un moule à moussage après quoi l'opération de moussage et de durcissement est exécutée, caractérisé en ce que

a) on utilise comme matériau pour la couche de couverture une résine époxide réticulable,

b) la résine époxide est appliquée, avec un durcissant notamment au pistolet ou par laminage sur la paroi du moule pour former sur celle-ci une couche d'épaisseur égale au moins dans certaines zones, ladite application étant effectuée pendant le temps d'égouttage de la résine et avant que le matériau pouvant mousser et formant la couche principale ne soit introduit,

c) qu'ensuite le matériau fournissant la couche de couverture est revêtu, avant qu'il ne soit entièrement durci, du matériau formant la couche principale en polyuréthane et que

d) la chaleur exotherme se produisant pendant la réaction de moussage et de polymérisation du matériau qui forme la couche principale en polyuréthane est exploitée pour accélérer le durcissement aussi bien de la couche de couverture que de la couche principale.

2. Procédé selon revendication 1 caractérisé en ce qu'un agent de démoulage tel que de la cire liquide ou de l'huile de silicone est appliqué sur la paroi du moule avant l'application de la résine époxide.

3. Procédé selon revendication 1 ou 2 caractérisé en ce qu'un moule isolé contre la chaleur est utilisé et que celui-ci est le cas échéant préchauffé.

4. Procédé selon l'une des revendications 1 à 3 caractérisé en ce que la résine époxide est appliquée en une épaisseur entre 0,1 et 1 mm, de préférence en une épaisseur de 0,3 mm sur la paroi du moule à moussage.

0 049 524

Fig.1

Fig.2

Fig.3

Fig.4